# EUROPÄISCHE PATENTANMELDUNG

(11) **EP 1 216 808 A1**
(43) Veröffentlichungstag der Anmeldung: **26.06.2002**
(21) Anmeldenummer: 01129930.2
(22) Anmeldetag: 17.12.2001
(51) Int. Cl.: B29C 45/14, B29C 70/76, B29C 45/33

(54) **Formwerkzeug und Verfahren zum randseitigen Anformen eines profilierten mehrseitigen Kunststoffrahmenteils an einen plattenförmigen Gegenstand**

(30) Priorität: 22.12.2000 DE 10064745
(71) Anmelder: Webasto Vehicle Systems International GmbH, 82131 Stockdorf (DE)
(72) Erfinder: Stangl, Karl, 86919 Utting (DE); Wern, Wolfgang, 86863 Langenneufnach (DE)
(74) Vertreter: Wiese, Gerhard

(57) **Zusammenfassung**

Die Erfindung betrifft ein Formwerkzeug und ein Verfahren zum randseitigen Anformen (Anspritzen, Anschäumen) eines profilierten mehrseitigen Kunststoffprofilrahmens an einen plattenförmigen Gegenstand, insbesondere an den Rand einer eine geometrische Form aufweisenden Deckelplatte (10) eines öffnungsfähigen Fahrzeugdachs, mit mehreren Schiebern (18, 19) zur Erzeugung einer Nut, die innenseitig das gewünschte Profil der Nut in komplementärer Form aufweisen und durch Stellmittel innerhalb eines Formwerkzeugs an die Anformstelle des Gegenstands anstellbar und von diesem entfernbar sind, nachdem die durch sie festgelegten Profilhohlräume mit Kunststoffmaterial gefüllt worden sind. Zur Vereinfachung des Formwerkzeugs und des Verfahrens ist vorgesehen, daß wenigstens ein Teil der Schieber (18, 19) von einem über wenigstens ein Eck oder eine Rundung der geometrischen Form der Deckelplatte (10) verlaufenden verstellbaren Teil gebildet wird.

## Beschreibung

Die vorliegende Erfindung betrifft ein Formwerkzeug gemäß dem Oberbegriff des Patentanspruchs 1. Sie betrifft ferner ein Verfahren zum randseitigen Anformen (Anspritzen, Anschäumen) eines profilierten mehrseitigen Kunststoffrahmenteils an einen plattenförmigen Gegenstand, insbesondere an den Rand einer eine geometrische Form aufweisenden Deckelplatte eines öffnungsfähigen Fahrzeugdachs gemäß dem Oberbegriff des Patentanspruchs 12.

Wenn beispielsweise ein Kunststoffrahmen an eine Deckelplatte eines öffnungsfähigen Fahrzeugdachs angeformt werden soll, der umlaufend eine Nut zur Aufnahme einer Dichtung aufweist, werden bislang für ein dazu verwendetes Formwerkzeug vier getrennte Schieber benötigt, die über in den Ecken angeordnete Trennstellen zur Einformung der Nut in den Kunststoffrahmen aneinandergrenzen. Um diese Schieber an die Deckelplatte anzustellen und von dieser zur Entformung des Kunststoffrahmens abzurücken, ist eine relativ aufwendige Mechanik und Steuerelektronik erforderlich, wobei für jeden Schieber ein getrennter Stellantrieb vorgesehen ist. Dabei wird jeder Schieber einzeln bewegt und die Bewegung der vier Schieber wird durch die Steuerelektronik synchronisiert. Zusätzlich zu der linearen Abrückbewegung ist beim Entformen vorgesehen, jeden einzelnen Schieber zu verschwenken. Aufgrund der insgesamt vier Trennstellen für das genannte Beispiel erfordert der mit den vier Schiebern hergestellte Kunststoffrahmen ferner einen hohen Entgratungsaufwand an den Stoßstellen der Schieber. Ferner ist für jeden einzelnen Schiebe ein relativ hoher Reinigungsaufwand erforderlich. Dieselbe Problematik stellt sich bei einem Formwerkzeug zur Herstellung eines Kunststoffprofilteils mit drei Profilseiten, für das bislang drei Schieber benötigt wurden, die an zwei Stoßstellen (Trennstellen) aneinander grenzen.

Der Erfindung liegt die Aufgabe zugrunde, ein Formwerkzeug und ein Verfahren zum randseitigen Anformen (Anspritzen, Anschäumen) eines profilierten mehrseitigen Kunststoffrahmenteils an einen plattenförmigen Gegenstand der eingangs genannten Art zu schaffen, das mit relativ einfacher Stellmechanik und Steuerelektronik bei geringem Entgratungsaufwand eine problemlose Anformung eines mehrseitigen Kunststoffprofils an einem plattenförmigen Gegenstand gewährleistet.

Gelöst wird diese Aufgabe bezüglich des Formwerkzeugs durch die Merkmale des Anspruchs 1 und bezüglich des Verfahrens durch die Merkmale des Anspruchs 12. Vorteilhafte Weiterbildungen sind in den jeweils rückbezogenen Unteransprüchen angegeben.

Da erfindungsgemäß zumindestens ein Teil der Schieber über ein Eck bzw. eine Rundung des plattenförmigen Gegenstandes verläuft, wird im Vergleich zum Stand der Technik die Anzahl der Schieber- Stoßstellen bzw. Trennstellen drastisch reduziert, nämlich im Falle eines Kunststoffprofils mit vier Profilseiten von vier auf bevorzugt zwei Trennstellen und im Falle eines Kunststoffprofilteils mit drei Profilseiten von zwei auf eine Trennstelle. Dadurch ist weniger Entgratungsaufwand nach dem Entformen erforderlich. Da die Stellbewegung für eine reduzierte Anzahl von Schiebern erfolgt, ist eine einfachere Stellmechanik einschließlich Steuerelektronik als bislang erforderlich. Dies führt zu einer Verringerung der Werkzeugkosten.

Ferner ermöglicht das erfindungsgemäße Formwerkzeug aufgrund der verringerten Anzahl von Schiebern kürzere Werkzeug-Schließ- und Öffnungszeiten.

Ein vorteilhafte Weiterbildung des erfindungsgemäßen Formwerkzeugs zum Anformen eines Kunststoffprofilteils sieht vor, daß zwei über ein Eck bzw. eine Rundung des plattenförmigen Gegenstandes verlaufende Schieber an einer Trennstelle auf einer Profilseite des anzuformenden Kunststoffprofilteils aneinandergrenzen. Alternativ dazu können zwei benachbarte Schieber auch an einer Trennstelle aneinandergrenzen, die in einem Eckbereich des plattenförmigen Gegenstandes angeordnet ist. Vorzugsweise sind dabei an zwei einander diametral gegenüberliegenden Ecken des anzuformenden Kunststoffprofilteils Trennstellen für die Schieber vorgesehen.

Um den Reinigungsvorgang des erfindungsgemäßen Formwerkzeugs zu verringern, sind die Stellmittel für die Schieber dazu ausgelegt, diese nach dem Entformen zur Reinigung um eine vorgegebene Distanz anzuheben. Um den Reinigungsvorgang zusätzlich zu vereinfachen, sind die Unterseiten der Schieber ohne Profil, vor allem eben gebildet.

Nachfolgend wird die Erfindung anhand der Zeichnungen beispielhaft näher erläutert; es zeigt:
- Fig. 1: im Querschnitt einen Randbereich einer Deckelplatte eines öffnungsfähigen Fahrzeugdachs, an welchem ein Kunststoffrahmenteil mittels eines Formwerkzeugs angeformt,
- Fig. 2: eine teilweise schematische Draufsicht auf einen Eckbereich der Deckelplatte gemäß Fig.1 (unter Weglassung der Dichtung 26),
- Fig. 3: eine schematische Darstellung eines Formwerkzeugs zur Herstellung einer Deckelplatte mit einem Kunststoffrahmenteil gemäß Fig. 1,
- Fig. 4: eine schematische Draufsicht auf eine Deckelplatte mit einem an drei Seiten vorgesehenen Kunststoffrahmenteil mit einer herkömmlichen Anordnung der Trennstellen für die Schieber,
- Fig. 5: eine schematische Draufsicht auf eine Deckelplatte mit einem an drei Seiten vorgesehenen Kunststoffrahmenteil mit einer erfindungsgemäßen Anordnung der Trennstellen für die Schieber,
- Fig. 6: eine schematische Draufsicht auf eine Deckelplatte mit einem an allen vier Seiten vorgesehenen Kunststoffrahmenteil mit einer erfindungsgemäßen Anordnung der Trennstellen für die Schieber, und
- Fig. 7: eine schematische Draufsicht auf eine schildförmige Deckelplatte mit einem an allen drei Seiten vorgesehenen Kunststoffrahmenteil mit einer erfindungsgemäßen Anordnung der Trennstellen für die Schieber.

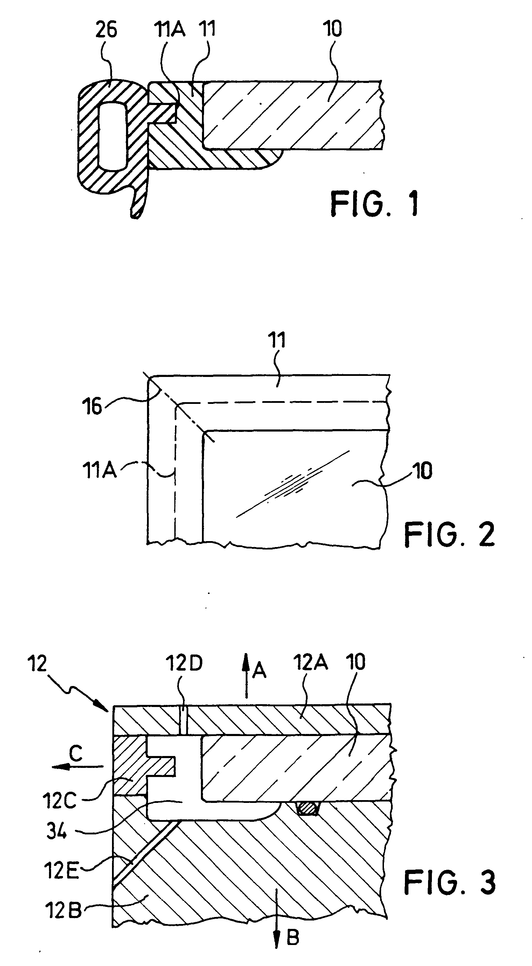

In Fig. 1 ist eine Deckelplatte 10 eines öffnungsfähigen Fahrzeugdachs in Form einer Glasplatte ausgebildet. Im einbaufertigen Zustand umfaßt die Deckelplatte 10 einen zumindestens an drei Seiten umlaufenden Kunststoffprofilrahmen 11, der mittels eines Formwerkzeugs 12 an den Rand der Deckelplatte 10 angeformt, beispielsweise angespritzt oder angeschäumt wird. Das Formwerkzeug 12 umschließt, wie in Fig. 3 dargestellt, den Rand der Deckelplatte 10 von drei Seiten, nämlich mit einem oberen Formwerkzeug 12 A von der Oberseite, mit einem unteren Formwerkzeug 12 B von der Unterseite und mit einem zwischen diesen beiden bewegbar geführten Schieber 12 C. Der Schieber 12 C ist von der Randseite aus soweit an die Deckelplatte 10 herangeführt, daß zwischen ihm und dem oberen und dem unteren Formwerkzeug 12 A bzw. 12 B ein Profilhohlraum 34 freibleibt. Dieser Profilhohlraum 34 ist komplementär zu der Kontur des herzustellenden Kunststoffprofilrahmens 11 ausgebildet.

Zur Herstellung des Kunststoffprofilrahmens wird bei eingelegter Deckelplatte 10 und geschlossenem Formwerkzeug 12 Kunststoffmaterial durch einen Einspritzkanal 12 D im oberen Formwerkzeug 12 A und einen Einspritzkanal 12 E im unteren Formwerkzeug 12 B in den Profilhohlraum 34 eingespritzt. Nach dem Aushärten desselben wird zunächst der Schieber 12 C nach außen gefahren, wodurch eine zu diesem komplementäre Nut 11 A freigegeben wird, die zur Aufnahme einer Dichtung 26 dient.

Die Schieber 12 C des Formwerkzeugs 12 sind in der Draufsicht bei einem bekannten Werkzeug für eine Deckelplatte mit einem Kunststoffprofilrahmen an drei Seiten der Deckelplatte 10 dreiteilig ausgebildet, wie dies aus Fig. 2 hervorgeht, nämlich mit einem ersten Schieber 13, einem zweiten Schieber 14 und einem dritten Schieber 15, die über zwei Stoßstellen bzw. Trennstellen 16 und 17 aneinandergrenzen. Diese beiden Trennstellen 16 und 17 liegen im Eckbereich der aneinander angestellten Schieber 13, 14 15 und hinterlassen nach dem Entformen am Kunststoffprofilteil 11 an dessen außenliegenden Kanten sowie an der Nut 11 A Grate, die durch Nachbearbeitung entfernt werden müssen. Bei einem bekannten Formwerkzeug für eine Deckelplatte mit einem Kunststoffprofilrahmen an allen vier Seiten der Deckelplatte 10 ist der Schieber analog dazu vierteilig ausgebildet, wobei sich die Trennstellen in allen vier Ecken bevorzugt unter einem Gehrungswinkel von 45° oder auf den Diagonalen befinden.

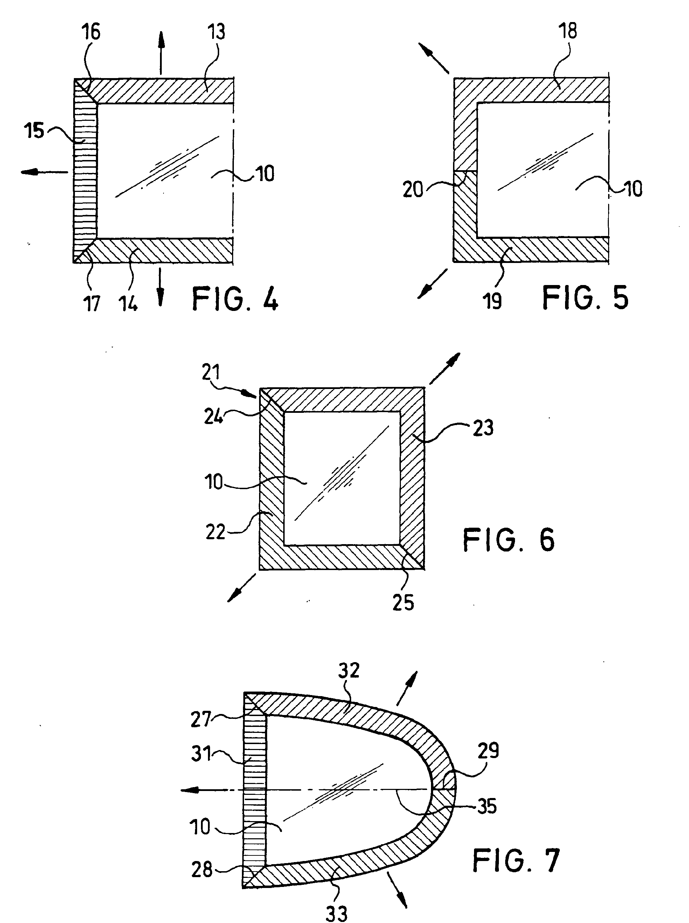

In Fig. 4 sind die Stellrichtungen für die Schieber 13, 14 und 15 mit Pfeilen dargestellt, entlang welchen die Schieber zur Entformung vom Kunststoffprofilrahmen aus dem Formwerkzeug 12 abgerückt werden. Für diese Stellbewegung sind drei Stellmechanismen erforderlich, die durch eine Steuerelektronik gesteuert werden.

Fig. 5 zeigt ein erfindungsgemäßes Formwerkzeug 12, das im Gegensatz zur bekannten Lösung in Fig. 4 lediglich aus zwei Schiebern 18 und 19 besteht, die über Eck einstückig verlaufen und über eine einzige Stoßstelle 20 aneinandergrenzen, die bevorzugt im mittleren Bereich einer geraden Kante - im Ausführungsbeispiel der Vorderkante - der Deckelplatte 10 senkrecht zu dieser Kante angeordnet ist. Das Abrücken des ersten Schiebers 18 und des zweiten Schiebers 19 vom fertiggestellten Kunststoffprofilrahmen 11 (Entformungsbewegung) erfolgt entsprechend der Pfeile entlang einer Diagonalen durch das jeweilige Eck der Schieber 18 und 19. Von Vorteil gegenüber dem Formwerkzeug gemäß dem Stand der Technik ist also, daß lediglich zwei Stellmittel für die Schieber 18 und 19 erforderlich sind und daß nur eine einzige Stoß- bzw. Trennstelle 20 vorhanden ist, die lediglich dort einen Entgratungsvorgang am Kunststoffprofilrahmen 11 erfordert.

Fig. 6 zeigt schematisch ein erfindungsgemäßes Formwerkzeug 21 für ein vierseitig profiliertes Kunststoffprofilteil 11. Ein entsprechendes Formwerkzeug gemäß dem Stand der Technik zur Erzeugung eines derartigen Kunststoffprofilteils würde vier voneinander getrennte Schieber mit vier separaten Stellmitteln erfordern, wobei die Schieber an den Trennstellen vier zu entgratende Bereiche zurücklassen würden. Im Gegensatz hierzu umfaßt das erfindungsgemäße Formwerkzeug 21 auch für diesen Fall lediglich zwei über Eck verlaufende Schieber 22 und 23, die an zwei in diagonal gegenüberliegenden Ecken positionierten Trennstellen 24, 25 aneinandergrenzen und entlang den dargestellten Pfeilen zum Entformen bewegt werden, d.h. bevorzugt entlang von Diagonalen des Ecks des ersten Schiebers 22 und des Ecks des zweiten Schiebers 23.

In nicht dargestellter Weise ist vorgesehen, die Schieber zusätzlich zu ihren linearen Stellbewegungen nach dem Austreten aus der Nut 11A in vertikaler Richtung um ca. 50 bis 70 mm anzuheben, um eine Reinigung der Schieberunterseiten zu ermöglichen, die zu diesem Zweck vorzugsweise plan gebildet sind.

Außer bei den in den Fig. 5 und 6 dargestellten rechteckigen Deckelplatten 12 ist die Erfindung vorteilhaft auch bei anderen Deckelformen, wie beispielsweise dreieckigen, trapezförmigen, kreisförmigen, elliptischen, ovalen oder anderen geometrischen Formen vorteilhaft einsetzbar. Fig. 7 zeigt eine schildförmige oder parabelförmige Deckelplatte 10, deren Kunststoffprofilrahmen 11 mit einer Nut 11A durch ein Werkzeug mit drei Schiebern 31, 32 und 33 erzeugt wird, die an Trennstellen 27, 28 und 29 aneinander stoßen. Dabei deckt der Schieber 31 eine gerade Kante der Deckelplatte 10 ab, während die Schieber 32 und 33 jeweils eine gebogene Kante abdecken und in der Trennstelle 29 am Scheitelpunkt zusammenstoßen. Bei einer entsprechenden Gestaltung der Kurven der Kanten ist sogar eine alternative Ausgestaltung mit nur zwei Schiebern und zwei Trennstellen möglich, wobei die beiden Trennstellen dann auf der Mittel-Längsachse 35 angeordnet sind und die Entformung in Richtung der in Fig. 7 eingezeichneten Trennstellen 27 bzw. 28 erfolgen könnte.

### Bezugszeichenliste

- 10: Deckelplatte
- 11: Kunststoffprofilrahmen
- 11A: Nut (für Dichtung)
- 12: Formwerkzeug
- 12A: oberes Formwerkzeug
- 12B: unteres Formwerkzeug
- 12C: Schieber (für 11A)
- 12D: Einspritzkanal (in 12A)
- 12E: Einspritzkanal (in 12B)
- 13: erster Schieber
- 14: zweiter Schieber
- 15: dritter Schieber
- 16: Trennstelle
- 17: Trennstelle
- 18: erster Schieber
- 19: zweiter Schieber
- 20: Trennstelle
- 21: Formwerkzeug
- 22: erster Schieber
- 23: zweiter Schieber
- 24: Trennstelle
- 25: Trennstelle
- 26: Dichtung
- 27: Trennstelle
- 28: Trennstelle
- 29: Trennstelle
- 31: erster Schieber
- 32: zweiter Schieber
- 33: dritter Schieber
- 34: Profilhohlraum (für 11)
- 35: Mittel-Längsachse

## Patentansprüche

1. Formwerkzeug zum randseitigen Anformen (Anspritzen, Anschäumen) eines profilierten mehrseitigen Kunststoffprofilrahmens (11) an einen plattenförmigen Gegenstand, insbesondere an den Rand einer eine geometrische Form aufweisenden Deckelplatte (10) eines öffnungsfähigen Fahrzeugdachs, mit mehreren Schiebern (12C, 13, 14, 16; 18, 19; 22, 23, 31, 32, 33) zur Erzeugung einer Nut (11A), die innenseitig das gewünschte Profil der Nut (11A) in komplementärer Form aufweisen und durch Stellmittel innerhalb eines Formwerkzeugs (12, 12A, 12B) an die Anformstelle des Gegenstands anstellbar und von diesem entfernbar sind, nachdem die durch sie festgelegten Profilhohlräume (34) mit Kunststoffmaterial gefüllt worden sind, **dadurch gekennzeichnet, daß** wenigstens ein Teil der Schieber (13, 14, 16; 18, 19; 22, 23, 31, 32, 33) von einem über wenigstens ein Eck oder eine Rundung der geometrischen Form der Deckelplatte (10) verlaufenden verstellbaren Teil gebildet wird.

2. Formwerkzeug nach Anspruch 1, zum Anformen eines Kunststoffprofilrahmens (11) an drei über Eck aneinandergrenzende Kanten der Deckelplatte (10), **dadurch gekennzeichnet, daß** zwei über Eck verlaufende Schieber (18, 19) vorgesehen sind, die an einer Trennstelle (20) an einer Seite der geometrischen Form der Deckelplatte (10) aneinandergrenzen.

3. Formwerkzeug nach Anspruch 1, zum Anformen eines Kunststoffprofilrahmens an vier über Eck aneinandergrenzende Kanten der Deckelplatte (10), **dadurch gekennzeichnet, daß** zwei über Eck verlaufende Schieber (22, 23) vorgesehen sind, die an zwei Trennstellen (24, 25) an zwei einander gegenüberliegenden Ecken der geometrischen Form der Deckelplatte aneinandergrenzen.

4. Formwerkzeug nach einem der vorhergehenden Ansprüche, zum Anformen eines Kunststoffprofilrahmens an die Kanten einer mit wenigstens einer Rundung versehenen geometrischen Form einer Deckelplatte (10), **dadurch gekennzeichnet, daß** wenigstens eine Trennstelle (29) für zwei benachbarte Schieber (32, 33) vorgesehen sind, die an einem Scheitelpunkt der Rundung angeordnet ist.

5. Formwerkzeug nach einem der vorhergehenden Ansprüche, **dadurch gekennzeichnet, daß** die geometrische Form einem Rechteck entspricht.

6. Formwerkzeug nach einem der vorhergehenden Ansprüche, **dadurch gekennzeichnet, daß** die geometrische Form einem Dreieck entspricht.

7. Formwerkzeug nach einem der vorhergehenden Ansprüche, **dadurch gekennzeichnet, daß** die geometrische Form einem Trapez entspricht.

8. Formwerkzeug nach einem der vorhergehenden Ansprüche, **dadurch gekennzeichnet, daß** die geometrische Form einem Kreis entspricht.

9. Formwerkzeug nach einem der vorhergehenden Ansprüche, **dadurch gekennzeichnet, daß** die geometrische Form einer Ellipse oder einem Oval entspricht.

10. Formwerkzeug nach einem der vorhergehenden Ansprüche, **dadurch gekennzeichnet, daß** die Stellmittel dazu ausgelegt sind, die Schieber (13, 14, 16; 18, 19; 22, 23, 31, 32, 33) zur Reinigung nach dem Entformen um eine vorgegebene Distanz anzuheben.

11. Formwerkzeug nach einem der vorhergehenden Ansprüche, **dadurch gekennzeichnet, daß** die Unterseite der Schieber (13, 14, 16; 18, 19; 22, 23, 31, 32, 33) unprofiliert, vor allem eben ausgebildet ist.

12. Verfahren zum randseitigen Anformen (Anspritzen, Anschäumen) eines profilierten mehrseitigen Kunststoffrahmenteils (11) an einen Gegenstand, insbesondere an den Rand einer eine geometrische Form aufweisenden Deckelplatte (10) eines öffnungsfähigen Fahrzeugdachs, unter Verwendung eines Formwerkzeugs (12, 21) nach einem der Anspräche 1 bis 11, **dadurch gekennzeichnet, daß** die Schieber (13, 14, 16; 18, 19; 22, 23, 31, 32, 33) zur Erzeugung einer Nut (11A) über ihre Ecken entlang einer Diagonalen der geometrischen Form an den Gegenstand (10) angestellt und zum Entformen von diesem abgerückt werden.

13. Verfahren nach Anspruch 12, **dadurch gekennzeichnet, daß** die Schieber (13, 14, 16; 18, 19; 22, 23, 31, 32, 33) zur Reinigung nach dem Entformen um eine vorgegebene Distanz angehoben werden.
